# EUROPEAN PATENT APPLICATION

(11) **EP 1 924 083 A2**
(43) Date of publication of application: **21.05.2008**
(21) Application number: 07019071.5
(22) Date of filing: 27.09.2007
(51) Int. Cl.: H04N 5/225, H04N 5/262

(54) **Portable device**

(30) Priority: 20.11.2006 JP 2006312411
(71) Applicant: Funai Electric Co., Ltd., Daito-shi, Osaka 574-0031 (JP)
(72) Inventor: Tanino, Ken, Osaka 574-0013 (JP)
(74) Representative: Grünecker, Kinkeldey, Stockmair & Schwanhäusser Anwaltssozietät

(57) **Abstract**

This portable device includes a photographic means which photographs an image with a lens, and a display means which displays this image upon a screen. Moreover, this portable device includes a storage means which stores map information in advance. Moreover, this portable device includes a position measurement means which measures the position of the portable device, and an azimuth detection means which detects the azimuth in which the lens is pointing. Furthermore, this portable device includes a control means which extracts, from the map information, a title which corresponds to at least one object being displayed by the display means, based upon the position which has been measured by the position measurement means, the azimuth which has been detected by the azimuth detection means, and the positional information. And the display means display the title which has been extracted upon the screen as superimposed upon the image.

## Description

### BACKGROUND OF THE INVENTION

The present invention relates to a portable device which is capable of being carried by a user, and more particularly relates to such a portable device comprising a display unit which displays an image of the subject which is being photographed upon a screen.

Portable devices which can be carried by the user, such as for example portable telephones equipped with cameras, are per se known from the prior art. Such a portable telephone equipped with a camera is provided with a display unit which displays upon a screen the image which is being photographed.

The user points a lens of the camera in the direction along which a building or a mountain or the like is located, and thereby composes an image of the object upon the screen of the display unit. By doing this, for example, a mountain which is being photographed is displayed upon the screen as a through image. Thereafter, the user performs photography or the like of this object.

It should be understood that a photographic device is proposed in Japanese Laid-Open Patent Publication 2002-94870.

However, with prior art type portable devices, no title for the photographic subject which is being photographed is displayed upon the screen of the display unit. Due to this, by misunderstanding, sometimes the user may undesirably compose upon the screen an image of an object which is different from the object which he desires to photograph. For example, even though the user wishes to photograph the mountain Mauna Kea, by misunderstanding he sometimes may compose an image of an adjacent but different mountain upon the screen, and this is undesirable.

As a result, with a portable device according to the prior art, sometimes the user has made a mistake and photographed the wrong photographic subject.

Accordingly, the objective of the present invention is to provide a portable device which notifies the user of a title of an object which is being displayed upon the screen, and thereby prevents the user from mistakenly photographing the wrong photographic subject.

### SUMMARY OF THE INVENTION

The portable device according to the present invention includes a photographic means which photographs an image with a lens, and a display means which displays an image photographed by the photographic means upon a screen. With this structure, the user points the lens in the direction of some object, and frames this object upon the screen of the display means. The object may be, for example, a building or a mountain. Furthermore, this portable device may be, for example, an image capturing device or a portable telephone equipped with a camera.

Moreover, this portable device includes a storage means which stores map information in advance. In this structure, this map information is information which includes, in mutual correspondence, a title of each of a plurality of objects which are present upon a map of a region in which the portable device is used, and positional information which specifies the respective position of each of the plurality of objects.

Furthermore, this portable device includes a position measurement means which measures the position of the portable device, and an azimuth detection means which detects the azimuth in which the lens is pointing.

Yet further, this portable device includes a control means which extracts, from the map information, a title which corresponds to at least one object being displayed by the display means, based upon the position which has been measured by the position measurement means, the azimuth which has been detected by the azimuth detection means, and the positional information.

And this control means commands the display means to display upon the screen the title which has been extracted, superimposed upon the image. Due to this, along with displaying that at least one object upon the screen of the display means, the title of that at least one object is also displayed upon the screen of the display means.

### BRIEF DESCRIPTION OF THE DRAWINGS

Fig. 1 is a block diagram showing the main structure of a portable device according to an embodiment of the present invention;
Fig. 2 is a perspective view showing the external appearance of this portable device according to an embodiment of the present invention;
Fig. 3 is a rear view of this portable device according to an embodiment of the present invention;
Fig. 4 is a flow chart showing a sequence of operations performed by a control unit of this portable device according to an embodiment of the present invention;
Fig. 5 is a figure showing an example of a through image which is being displayed upon a display unit 7;
Fig. 6 is a figure showing another example of a through image which is being displayed upon the display unit 7;
Fig. 7 is a figure showing yet another example of a through image which is being displayed upon the display unit 7; and
Fig. 8 is a figure showing the contents of map information recorded in a flash memory 6 of a portable device according to a variant embodiment of the present invention.

### DETAILED DESCRIPTION OF THE INVENTION

In the following, embodiments of the portable device according to the present invention will be explained.

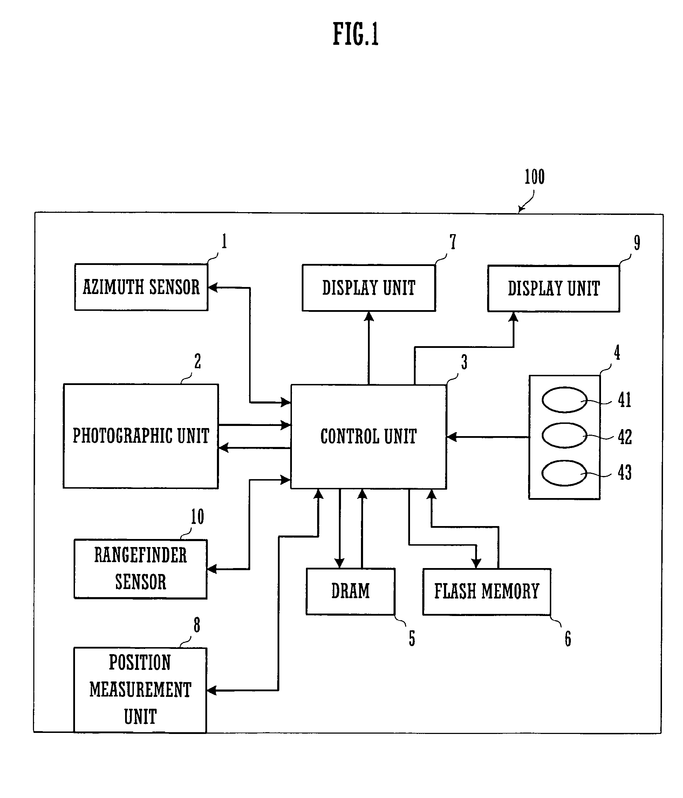

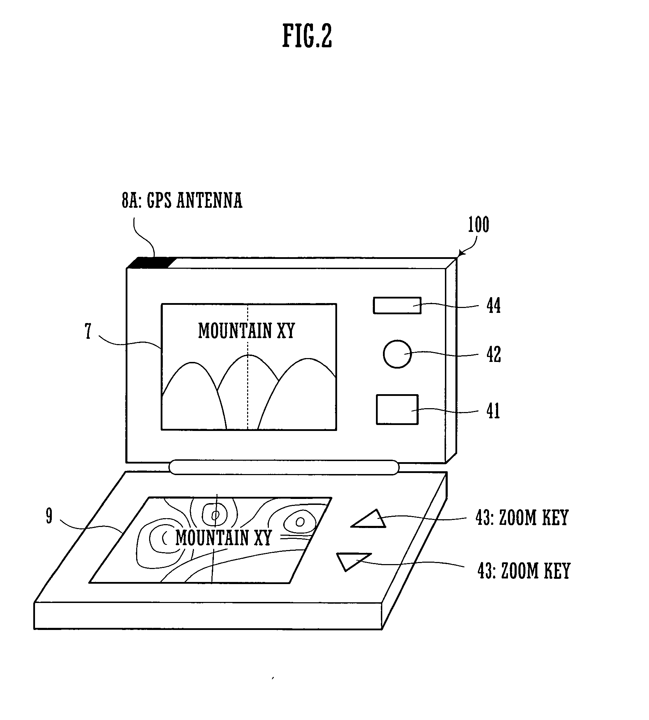

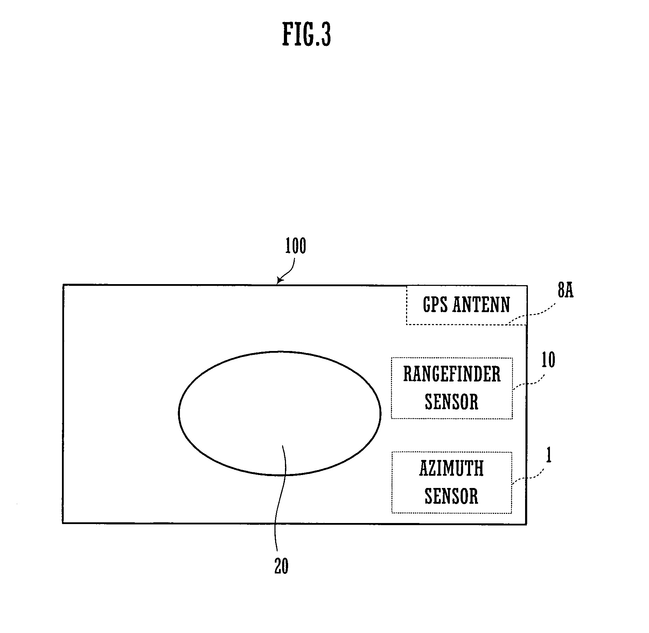

Fig. 1 is a block diagram showing the main structure of a portable device according to an embodiment of the present invention. And Fig. 2 is a perspective view showing the external appearance of this portable device according to an embodiment of the present invention. Moreover, Fig. 3 is a rear view of this portable device according to an embodiment of the present invention

As shown in Fig. 1, this portable device 100 comprises: an azimuth sensor 1 which detects the azimuth of the portable device 100; a photographic unit 2 which captures an image of a photographic subject and an image of the vicinity thereof; a control unit 3 which controls the operation of the various sections of this portable device 100; an actuation unit 4 which receives actuation input from the user; a DRAM 5 which temporarily stores image data corresponding to the image of the photographic subject which has been captured; a flash memory 6 which stores this image data; a display unit 7 which displays an image of the photographic subject upon a screen; a position measurement unit 8 which measures the position of the portable device 100; a display unit 9 which displays a map image based upon map information; and a rangefinder sensor 10 which measures the distance from the position of this portable device 100 to the photographic subject.

Here, the control unit 3 corresponds to the "control means" of the Claims. Moreover, the flash memory 6 corresponds to the "storage means" of the Claims. Furthermore, the rangefinder sensor 10 corresponds to the "distance measurement means" of the Claims.

The azimuth sensor 1 comprises an electronic azimuth measurement device which is equipped with a geomagnetism sensor. This geomagnetism sensor may be, for example, a MR element. And, based upon the geomagnetic field, this azimuth sensor 1 detects the azimuth in which a photographic lens 20 is pointed. Moreover, the azimuth sensor 1 sends to the control unit 3 azimuth information which specifies this azimuth in which the photographic lens 20 is pointed.

The photographic unit 2 comprises the photographic lens 20, a zoom unit which includes a zoom lens, a signal conversion unit which includes a CCD and a CCD drive unit, and a signal processing unit, not all of which are shown in the figures. And, based upon a command from the control unit 3, the photographic unit 2 shifts the zoom lens with a zoom unit (not shown in the figures). In other words, the photographic unit 2 performs zoom operation. Due to this, the focal point distance may be freely changed within a fixed range.

The control unit 3 comprises, for example, a CPU. Moreover, this control unit 3 comprises a ROM which stores a control program in which control procedures for the various sections of the portable device 100 are specified, and a RAM which serves as a working space for maintaining the data processed by this control program, neither of which is shown in the figures. Furthermore, the control unit 3 is endowed with an OCR (Optical Character Recognition) function of recognizing characters which are drawn as image data.

The control unit 3 performs overall control of the portable device 100 according to the above described control program. Furthermore, the control unit 3 controls the various sections of the portable device 100 in correspondence to commands from the actuation unit 4. For example, the control unit controls the zoom unit of the photographic unit 2 based upon a zoom amount commanded by actuation of a zoom key 42.

The actuation unit 4 is provided with a shutter key 41 for performing photography, the zoom key 42 which receives a command for a zoom amount, a power supply key 43 which toggles between power supply ON and power supply OFF upon actuation by the user, and various other keys. When these keys are actuated, commands corresponding to those actuations are sent to the control unit 3.

The DRAM 5 is used as a memory for working. This DRAM 5 may include, for example, a buffer region for temporarily storing an image which has been photographed or an image which has been replayed, a working region for performing data compression or expansion tasks, and the like.

The flash memory 6 stores images which have been photographed. Furthermore map information, which includes a map of the region in which this portable device 100 is used and titles corresponding to a plurality of objects which are present upon this map, is stored in the flash memory 6 in advance. This map is a map which includes, at least, the area surrounding the position of the portable device 100. Furthermore, this map specifies the respective positions of a plurality of objects. These objects may be, for example, mountains or buildings.

It should be understood that the map described above corresponds to the "positional information" of the Claims. The display unit 7 comprises a video memory, a video encoder, and a liquid crystal display unit. The details of this video memory, video encoder, and liquid crystal display unit will be described hereinafter.

The position measurement unit 8 may comprise, for example, a GPS antenna 8A, an RFamplifier, an A/D converter, a data register, a counter, a decoder, and a microcomputer which controls these units. This position measurement unit 8 receives radio waves from the GPS satellites with the GPS antenna 8A. Next, the position measurement unit 8 amplifies and demodulates these received signals. And the position measurement unit 8 decrypts the satellite data which it has acquired by this demodulation. Moreover, the position measurement unit 8 measures the position of the portable device 100 from the data which it has thus decrypted. Finally, the position measurement unit 8 sends the position information which it has acquired by this measurement to the control unit 3.

The display unit 9 comprises a video memory, a video encoder, and a liquid crystal display unit. The video encoder converts image data which has been outputted from the control unit 3 to the video memory into a video signal, which it outputs to the liquid crystal display unit. This image data is data which specifies a map of the area surrounding the current position of the portable device 100, and the title of at least one object which is present upon this map. And the liquid crystal display unit displays this video signal which has thus been outputted upon a screen. Due to this, the display unit 9 displays a map of the area surrounding the current position of the portable device 100, based upon the map information (refer to Fig. 2).

The rangefinder sensor 10 measures the distance from the portable device 100 to the photographic subject.

Now, the operation when displaying upon the screen the image of a subject which is being photographed by the user will be explained.

First, the photographic unit 2 captures an image with the photographic lens 20. This image is an image which includes an image of the photographic subject and an image of the vicinity of the photographic subject. Next, the photographic unit 2 inputs the image which it has thus captured to its signal conversion unit. The signal conversion unit converts the image which has thus been captured to an image signal with its CCD, and thus converts the image into digital data. Moreover, from this digital data, using its signal processing unit, the photographic unit 2 acquires a signal component (hereinafter termed the image data) which consists of a multiplexed signal including luminance, color difference, and the like (Y, Cb, and Cr data). And the photographic unit 2 transfers this image data to the DRAM 5 via the control unit 3. Furthermore, the image data which has thus been transferred to the DRAM 5 is also transferred via the control unit 3 to the video memory of the display unit 7. Here the term "through image" refers to an image which shows the image which can currently be seen through the photographic lens. Moreover, during this operation of through image display, the image data in the DRAM 5 is constantly being updated with the newest information available.

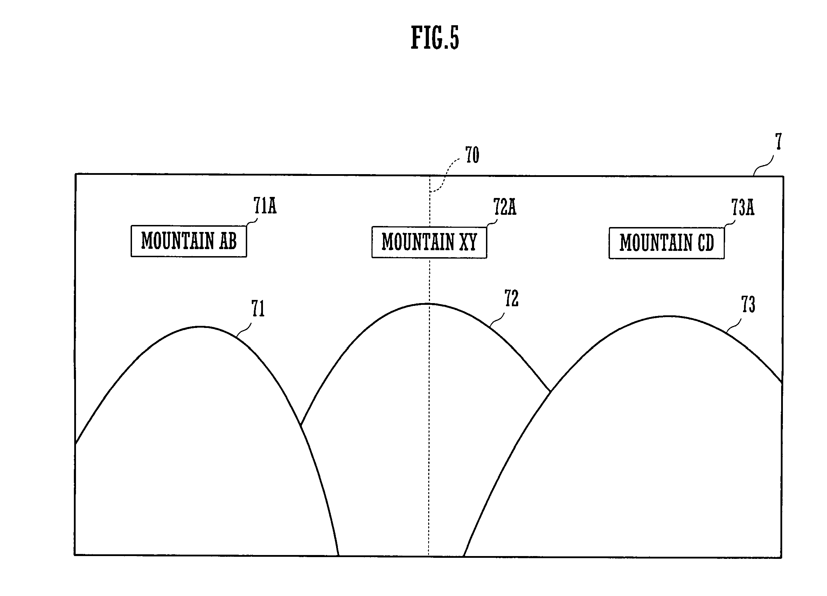

The video encoder of the display unit 7 converts the image data which has been transferred from the photographic unit 2 to the video memory into a video signal, which it outputs to its liquid crystal display unit. And the liquid crystal display unit displays this video signal which has thus been outputted upon its screen. By doing this, during photography, the display unit 7 displays a through image under the display control of the control unit 3 (refer to Fig. 2 and Fig. 5 which will be described hereinafter). Moreover, the display unit 7 is endowed with a superimposition function of displaying characters as superimposed over this through image, under the display control of the control unit 3 (refer to Fig. 2 and Fig. 5 which will be described hereinafter).

And, when the shutter key 41 is depressed, the control unit 3 compresses the image data which is currently stored in the DRAM 5 (for example by JPEG), and stores the result in the flash memory 6. By doing this, photography of the photographic subject is completed.

When, after this photography has been completed, replay of image data which is stored in the flash memory 6 is commanded by the actuation unit 4, the control unit 3 reads out from the flash memory 6 the image data which is to be the subject of replay. And the control unit 3 outputs this image data to the video memory of the display unit 7. The video encoder of the display unit 7 converts this image data which has been outputted from the control unit to the video memory into a video signal, which it then outputs to the liquid crystal display unit. And the liquid crystal display unit of the display unit 7 displays this video signal which has thus been outputted upon its screen. By doing this, the display unit 7 replays the image data in the flash memory 6, and displays a replay image upon its screen (refer to Fig. 2 and Fig. 5 which will be described hereinafter).

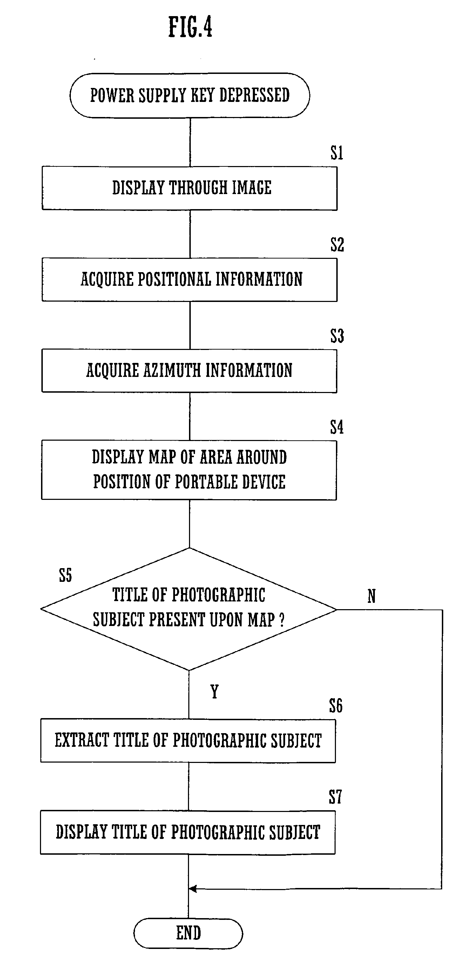

Fig. 4 is a flow chart showing a sequence of operations performed by a control unit of this portable device according to an embodiment of the present invention. This operation is the operation which is performed when the power supply to the portable device 100 is turned ON due to the power supply key 43 being depressed.

When the power supply key 43 is depressed, the control unit 3 displays a through image upon the display unit 7 (a step S1). Due to this, an image of the subject which is being photographed by the user is displayed as this through image upon the display unit 7. Here, in this embodiment, it is supposed that the user is directing the photographic lens 20 in the direction of a mountain, so that the desired mountain is framed upon the screen of this display unit 7.

Next, the control unit 3 commands the position measurement unit 8 to measure the position of the portable device 100, and thereby acquires position information which specifies the current position of the portable device 100 (a step S2).

And the control unit 3 commands the azimuth sensor 1 to detect the azimuth of the portable device 100, and thereby acquires azimuth information which specifies the current azimuth in which the photographic lens 20 is pointing (a step S3).

Then the control unit 3 reads out map information from the flash memory 6, based upon the current position which it has acquired in the step S2 and the azimuth which it has acquired in the step S3, and displays upon the display unit 9 a map of the area surrounding the current position of the portable device 100, as shown in Fig. 2 (a step S4). To describe this in more detail, based upon said current position and upon said azimuth, the control unit 3 outputs to the video memory of the display unit 9 image data which depicts a map of the area surrounding the current position of the portable device 100, and the title of at least one object which is present upon this map. Due to this, an image as shown in Fig. 2 is displayed upon the screen of the display unit 9. And, due to the display upon the display unit 9, the position of at least one object in the photographic field which is currently being displayed upon the display unit 7 is specified.

It should be understood that, in an implementation, it would also be acceptable for the distance from the portable device 100 to the photographic subject, as measured by the rangefinder sensor 10, to be employed as an additional parameter. In other words, it would be acceptable for the control unit 3 to read out map information from the flash memory 6, and to display a map of the area surrounding the portable device 100 upon the display unit 9, based upon the distance from the portable device 100 to the photographic subject and also upon the current position and azimuth. By doing this, it would be possible to display a more appropriate map upon the display unit 9.

And the control unit 3 makes a decision as to whether or not a title for the photographic subject which is being displayed upon the display unit 7 is present upon the map which is being displayed upon the display unit 9 (a step S5). This decision is performed based upon the map information which has been read out from the flash memory 6.

If the decision in the step S5 is negative, then the control unit 3 terminates this processing.

On the other hand, if the decision in the step S5 is affirmative, then the control unit 3 extracts the title of the photographic subject which is being displayed upon the display unit 7 from the map information (a step S6). And the control unit 3 commands the display unit 7 to display this title upon its screen, along with the image of the photographic subject (a step S7). Finally, the control unit 3 terminates this processing. To describe these steps S6 and S7 in more detail, first, by employing its OCR function, the control unit 3 reads out the title of the object, which is supposed to be drawn in the image data which is currently deployed in the video memory. And the control unit 3 commands the display unit 7 to display the characters making up this title which has been read out as superimposed over the image of the photographic subject. By doing this, a through image as shown, for example, in Fig. 5 is displayed upon the display unit 7.

Fig. 5 is a figure showing an example of a through image which is being displayed upon the display unit 7. For example, in the step S7, the display unit 7 may display a title like the one shown in Fig. 5 along with the image of the photographic subject. In Fig. 5, the characters 71A which spell out the title of a mountain 71 as being "Mountain AB" are displayed, the characters 72A which spell out the title of a mountain 72 as being "Mountain XY" are displayed, and the characters 73A which spell out the title of a mountain 73 as being "Mountain CD" are displayed.

In the state in which, in this manner, the mountains 71 through 73 are being displayed upon the display unit 7 with their respective titles 71A through 73A in close juxtaposition to them, the user may depress the shutter key 41 and perform photography or the like of the photographic subject.

Since, at this time, the titles 71A through 73A of the mountains 71 through 73 which are being displayed are notified to the user, accordingly, with this portable device 100, it is possible to prevent the user from making an undesirable mistake as to the photographic subject which he is photographing. In concrete terms, it is possible to prevent the occurrence of a case in which, although actually the user wants to take a picture of the mountain 71, due to a misunderstanding he centers the mountain 72 in the photographic field of view.

Furthermore, during hiking, if the user does not know the title of a photographic subject which is present in the area around the position of the portable device 100, then he may point the photographic lens 20 in the direction of that photographic subject, so that said photographic subject is framed upon the display unit 7. By doing this, the title of that photographic subject is displayed upon the through image on the display unit 7 (refer to Fig. 5). Accordingly, the user is able to know the title of that photographic subject.

It should be understood that although, in this embodiment, mountains 71 through 73 were used as the photographic subject, in an actual implementation, it is not necessary for the photographic subject to be limited to being a mountain. For example, the photographic subject may be a building or the like. Furthermore, the following variant embodiments of the present invention may also be employed.

### - A FIRST VARIANT EMBODIMENT -

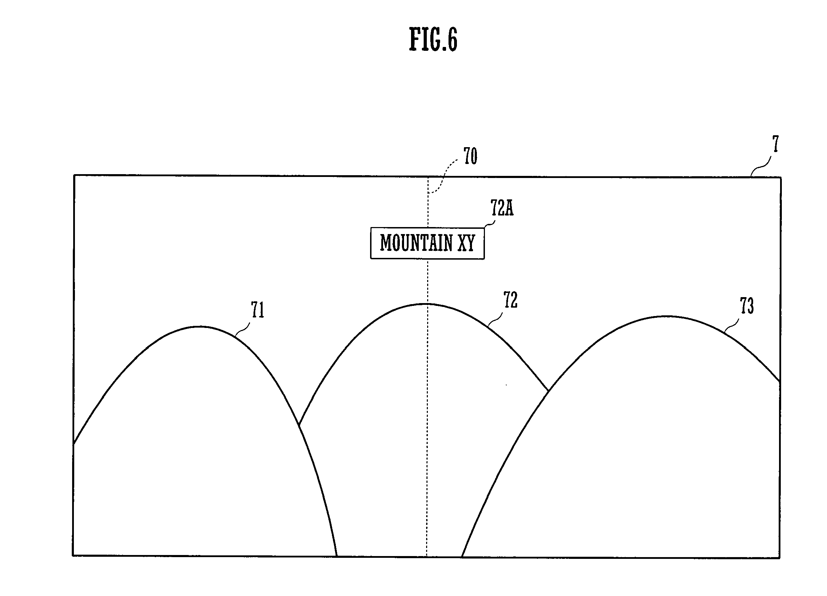

Fig. 6 is a figure showing another example of a through image which is being displayed upon the display unit 7. Normally, the user frames the subject which he desires to photograph in the center of the display unit 7. In this case, sometimes it may be considered that the titles of objects other than the desired photographic subject constitute an impediment to photographic composition.

Thus, in the step S7 of the Fig. 4 flow chart, the display unit 7 displays only the title of the photographic subject which is being displayed in the center of the screen. As shown in Fig. 6, the photographic subject which is being displayed in the center of the screen of the display unit 7 is the mountain 72 which is positioned upon the center line 70. In Fig. 6, only the characters 72A which specify the title "Mountain XY" of this mountain 72 are displayed.

According to the above, the user is able to be apprised only of the title of the desired photographic subject. To put it in another manner, it is possible to prevent unnecessary titles from being presented to the eyes of the user.

### - A SECOND VARIANT EMBODIMENT -

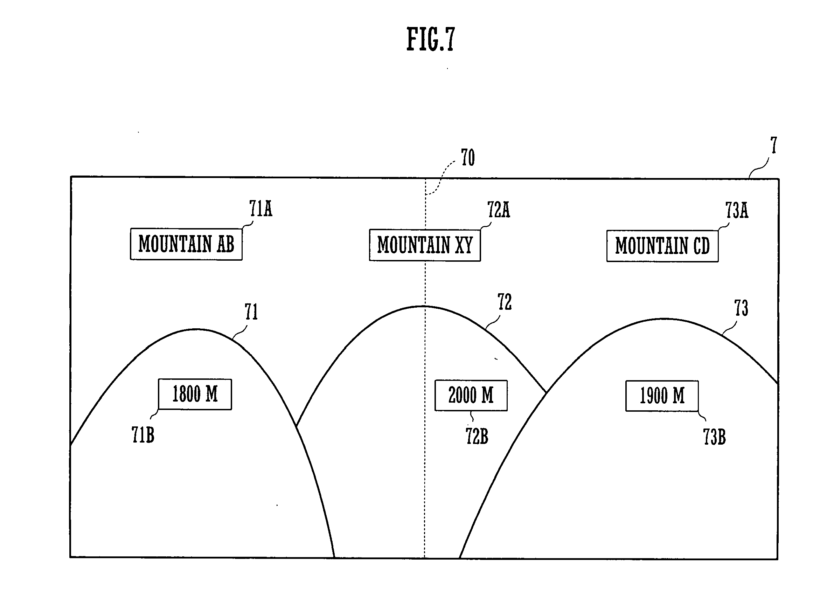

Fig. 7 is a figure showing yet another example of a through image which is being displayed upon the display unit 7. It would also be acceptable to store map information including the altitudes of various mountains in the flash memory 6. And, in the steps S6 and S7 of the Fig. 4 flow chart, along with extracting the titles of the mountains from the map information, the control unit 3 also extracts the altitudes of these mountains, and displays them upon the display unit 7 (refer to Fig. 7). In Fig. 7, the characters 71B are displayed for specifying the altitude of the mountain 71, the characters 72B are displayed for specifying the altitude of the mountain 72, and the characters 73B are displayed for specifying the altitude of the mountain 73.

Furthermore, it would also be acceptable to provide a structure as will now be described. In concrete terms, the position measurement unit 8 receives the radio waves from four GPS satellites with the GPS antenna 8A. By doing this, when decryption of the satellite data which has been acquired is performed, the position measurement unit 8 is able to acquire the altitude of the photographic subject. And, in the step S2 of Fig. 4, the position measurement unit 8 transmits positional information including the altitude of the photographic subject to the control unit 3. Finally, in the step S7 of Fig. 4, along with the title of each mountain, the control unit 3 also displays the altitude of said mountain upon the display unit 7 (refer to Fig. 7).

If the system operates as above, then, along with framing the mountain which is the photographic subject and being apprised of its title, it is also possible for the user to be apprised of the altitude of that mountain.

It should be understood that it would also be acceptable to provide a structure in which, as shown in Fig. 6, only the title and the altitude of the photographic subject which is displayed in the center of the screen of the display unit 7 are displayed.

### - A THIRD VARIANT EMBODIMENT -

Instead of the map described above, it would also be acceptable to use the latitude and longitude of each of a plurality of objects as the positional information.

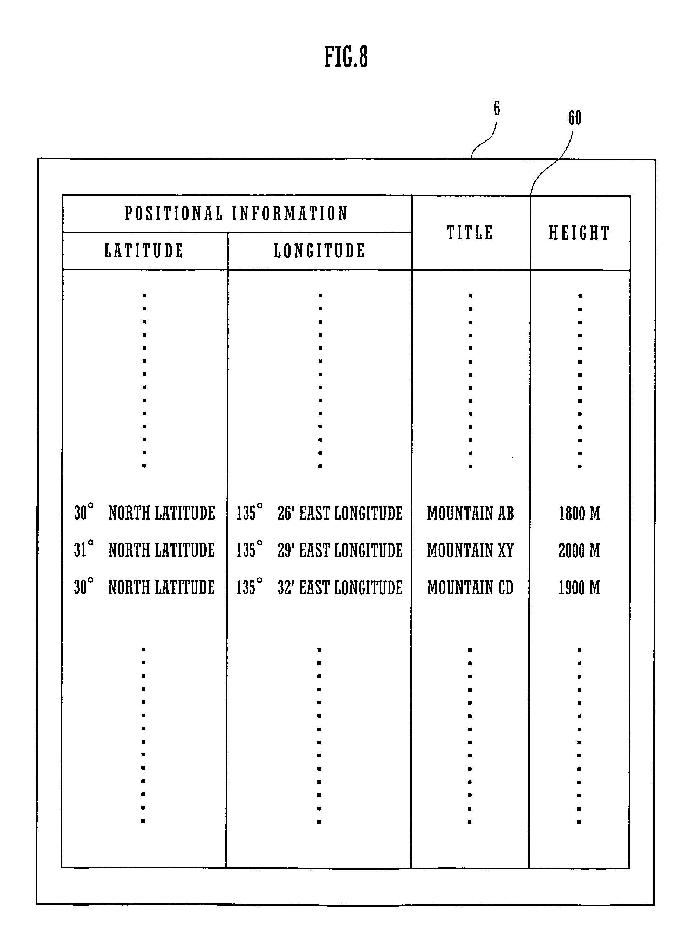

Fig. 8 is a figure showing the contents of map information recorded in the flash memory 6 of a portable device according to this third variant embodiment of the present invention. This map information 60 is a table in which the titles of a plurality of objects which are present upon the map of the region in which this portable device 100 is used are held in correspondence with the respective positions and heights of each of these objects. This map information 60 is stored in the flash memory 6 in advance.

And the control unit 3 extracts the title and height of the photographic subject from this map information 60, based upon the distance from the portable device 100 to the photographic subject, the current position which was acquired in the step S2, and the azimuth which was acquired in the step S3 (a step S6). And the control unit 3 commands the display unit 7 to display this title and height, along with the image of the photographic subject (a step S7). To describe the step S6 in more detail, first, the control unit 3 specifies the position of the photographic subject which is being displayed upon the display unit 7 (in concrete terms, its latitude and longitude), based upon the distance from the portable device 100 to the photographic subject, the current position of the portable device 100 which was acquired in the step S2, and the azimuth of the portable device 100 which was acquired in the step S3. For example, the control unit 3 may specify that the latitude of the photographic subject which is being displayed upon the display unit 7 is 31°00'N and that its longitude is 135°29'E. Next, the control unit 3 extracts the title and height which correspond to this specified latitude and longitude from the map information 60. For example, the control unit 3 may extract, from the map information, the title "Mountain XY" and the height "2000 m" which correspond to the longitude 31°00'N and the latitude 135°29'E.

It should be understood that, in this third variant embodiment, it is not necessary to provide the display unit 9.

### - A FOURTH VARIANT EMBODIMENT -

It would also be acceptable, when the shutter key 41 is depressed by the user, and the image data in the DRAM 5 is stored in the flash memory 6, for the control unit 3 to store the title of the photographic subject in the flash memory 6, along with its image data.

When, in the future, the image data is replayed upon the display unit 7, the control unit 3 also displays the titles of the mountains upon the display unit 7 (refer to Fig. 5). By doing this, along with seeing the mountain which was the photographic subject, the user is also able to be apprised of the title of that mountain.

### - A FIFTH VARIANT EMBODIMENT -

It would also be acceptable, when the shutter key 41 is depressed by the user, and the image data in the DRAM 5 is stored in the flash memory 6, for the control unit 3 to store the altitude of the mountain which is the photographic subject in the flash memory 6, along with its image data and its title.

When, in the future, the image data is replayed upon the display unit 7, the control unit 3 also displays the altitudes of the mountains upon the display unit 7, along with their titles (refer to Fig. 7). By doing this, along with seeing the mountain which was the photographic subject, and being apprised of its title, the user is also able to be apprised of the altitude of that mountain.

## Claims

1. A portable device, comprising:
a photographic means (2) which photographs an image with a lens (20);
and a display means (7) which displays an image photographed by said photographic means (2) upon a screen; **characterized by** further comprising:
a storage means (6) which stores in advance map information including, in mutual correspondence, a title of each of a plurality of objects which are present upon a map of a region in which said portable device is used, and positional information which specifies the respective position of each of said plurality of objects;
a position measurement means (8) which measures the position of said portable device;
an azimuth detection means (1) which detects the azimuth in which said lens (20) is pointing; and
a control means (3) which extracts, from said map information, a title which corresponds to at least one object being displayed by said display means (7), based upon said position which has been measured by said position measurement means (8), said azimuth which has been detected by said azimuth detection means (1), and said positional information;
and wherein said control means (3) commands said display means (7) to display upon said screen said title which has been extracted, superimposed upon said image.

2. A portable device according to Claim 1, further **characterized by** further comprising a distance measurement means (10) which measures the distance from said portable device to said at least one object which is being displayed by said display means (7);
and wherein said control means (3) extracts from said map information said title which corresponds to said at least one object being displayed by said display means (7), based upon said distance which has been measured by said distance measurement means (10), said position which has been measured by said position measurement means (8), said azimuth which has been detected by said azimuth detection means (1), and said positional information.

3. A portable device according to Claim 1 or Claim 2, further **characterized in that** said display means (7) displays said title which has been extracted for only a single object which is displayed near the center of said screen of said display means (7).

4. A portable device according to any one of Claims 1 through 3, further **characterized in that**:
said map information further includes, in correspondence to said positional information, height information which specifies the height of each of said plurality of objects;
and said control means (3):
extracts from said map information the title and the height of said at least one object which is being displayed by said display means (7); and
commands said display means (7) to display said title and said height which have been extracted upon said screen, superimposed upon said image.

5. A portable device according to any one of Claims 1 through 4, further **characterized in that** said object is a mountain or a building.
